# Europäisches Patentamt
## European Patent Office
## Office européen des brevets

(19)

(11) Veröffentlichungsnummer: **0 006 520**
**A1**

(12)

# EUROPÄISCHE PATENTANMELDUNG

(21) Anmeldenummer: **79101870.8**

(22) Anmeldetag: **11.06.79**

(51) Int. Cl.³: **E 21 D 21/00**, E 21 D 20/02, E 02 D 5/74

(30) Priorität: 22.06.78 DE 2827314

(43) Veröffentlichungstag der Anmeldung: **09.01.80**
Patentblatt 80/1

(84) Benannte Vertragsstaaten: **AT BE CH DE FR GB IT NL**

(71) Anmelder: **BAYER Aktiengesellschaft, Zentralbereich Patente, Marken und Lizenzen Bayerwerk, D-5090 Leverkusen 1 (DE)**
Anmelder: **STRABAG BAU - AG, Siegburger Strasse 241 Postfach 211120, D-5000 Köln 21 (DE)**

(72) Erfinder: **Preis, Lothar, Dr., Wolfskaul 7, D-5000 Köln 80 (DE)**
Erfinder: **Schmidt, Rudolf, Dipl.-Ing., Am Jungholzkamp 22, D-5093 Burscheid 1 (DE)**

(54) **Spannbarer Erd- und Felsanker.**

(57) Das Zugglied (1) des Ankers besteht aus unidirektional angeordneten Glasfasern. Sie sind in Kunststoff eingebettet. Ein Endstück (3) stützt sich gegen einen in sich verspannbaren Kunstboden (4). Die direkte Einbettung in einem Verpreßkörper (6) ist auch möglich. Der Anker hat eine hohe Tragfähigkeit, ist vor- und nachspannbar, und es ergeben sich mit ihm keine Korrosionsprobleme.

EP 0 006 520 A1

BAYER AG                          STRABAG BAU- AG
Leverkusen-Bayerwerk             Köln 21

## Spannbarer Erd- und Felsanker

Es sind Verpreßanker bekannt, bei denen durch Einpressen von Zementschlämmen oder -mörtel um den hinteren Teil eines in den Boden eingebrachten Stahlzuggliedes ein Verpreßkörper hergestellt wird, der über Stahlzugglied und Ankerkopf mit dem zu verankernden Bauteil kraftschlüssig verbunden wird. Eine vom Verpreßanker aufzunehmende Kraft wird nicht, etwa wie bei Ankerpfählen ohne Fuß, über die ganze Länge, sondern nur im Bereich des Verpreßkörpers in den Boden eingeleitet. Die Krafteintragungslänge ist der Anteil der Ankerlänge, über den die Ankerkraft in den Boden übertragen wird, sie entspricht in diesem Fall der Länge des Verpreßkörpers.

Bei Permanentankern soll die Lebenszeit wenigstens 50 Jahre betragen, und in dieser langen Zeit können besonders zwei Aspekte wichtig werden: die Korrosionsgefahr und die Spannkraftverluste. Stahl hat einen hohen E-Modul (210 000 MPa). Die Bandbreite der Verformungsmoduli dicht gelagerter Locker- und Festgesteine reicht etwa von 100 MPa (Sand) bis 10 000 MPa (Basalt). Bei Gefügelockerungen liegen die Werte tiefer. Bei den starken Unterschieden im elastischen Verhalten von Ankerstahl und Verankerungsboden können sich schon bei geringer Nachgiebigkeit im Boden oder im Anker große Spannkraftverluste ergeben. Es hat sich außerdem gezeigt, daß inner-

Le A 18 916

halb des Verpreßkörpers infolge überhöhter Spannungen und Längenänderungen bei Gebirgsverschiebungen und/oder Vorspannkraftverlusten Risse auftreten können, und die Gefahr der Korrosion des Zuggliedes innerhalb der Verpreßstrecke recht groß sein kann.

Anker, bei denen das Zugglied nicht aus Stahl besteht, sind nur als Einstabanker mit Kunstharzverklebung bekannt; sie haben im Vergleich zu Verpreßankern nur eine geringe Länge und Tragfähigkeit.

Aufgabe der Erfindung ist es, einen vor- und nachspannbaren Anker zu entwickeln, der sowohl für Locker- als auch Felsgestein und sowohl für vorübergehende als auch dauernde Verankerungen geeignet ist. Die Aufgabe wird dadurch gelöst, daß das Zugglied aus unidirektional angeordneten Glasfasern besteht, die in Kunststoff eingebettet sind. Weitere vorteilhafte Ausführungsarten sind in den Unteransprüchen beschrieben.

Besonders vorteilhaft bei dem erfindungsgemäßen Erd- und Felsanker sind die hohe Tragfähigkeit, die Möglichkeit, den Anker vor- und nachzuspannen und das Nichtvorhandensein von Korrosionsproblemen. Die im Boden bleibenden Teile müssen nicht gesondert gegen Korrosion geschützt werden. Es entfallen damit übliche Schutzmaßnahmen wie z.B. Anstriche, Bandagen, Zementsteinüberdeckungen. Der Verpreßkörper und das Endstück haben hier nicht die Aufgabe, das Zugglied gegen Korrosion zu schützen. Die im Boden verbleibenden Teile brauchen nicht fallweise entfernbar zu sein: Sie sind

Le A 18 916

- 3 -

praktisch kein Hindernis bei evtl. späteren Baumaßnahmen. Der Dehnweg beim Anspannen ist so groß, daß Spannverluste durch Schlupf oder Kriechen in den Verankerungsstrecken klein und im allgemeinen unbedeutend sind. Der Wert des E-Moduls von gerichtetem GFK-Material ist beispielsweise nur ein Viertel so groß wie der von Stahl, dadurch vervierfachen sich die Dehnungen gegenüber Stahl unter gleicher Spannung.

Der erfindungsgemäße vor- und nachspannbare Erd- und Felsanker ist in der Zeichnung dargestellt und im folgenden weiter beispielhaft beschrieben. Das Zugglied 1 des Ankers befindet sich in einem Bohrloch 2. Das Zugglied besteht aus einem oder mehreren Elementen aus unidirektional glasfaserverstärktem Kunststoff. Das Einzelelement kann ein Vollprofil oder Hohlprofil sein; im Querschnitt sind verschiedene Formen möglich, bevorzugt sind Kreis, Ellipse, Rechteck und Dreieck. Die Dicke der einzelnen Elemente liegt üblicherweise im Bereich von 2 bis 20 mm. Die Elemente können mehrere hundert Meter lang sein. Sie können gebündelt oder gespreizt angeordnet sein.

Es zeigen:

Fig. 1 Schnitt durch einen Erdanker mit einem Endstück am Zugglied.

Fig. 2 Schnitt durch einen Erdanker mit einem glasfaserverstärktem Kunststoffrohr über dem Endstück.

Fig. 3 Schnitt durch einen Erdanker ohne Endstück.

Le A 18 916

- 4 -

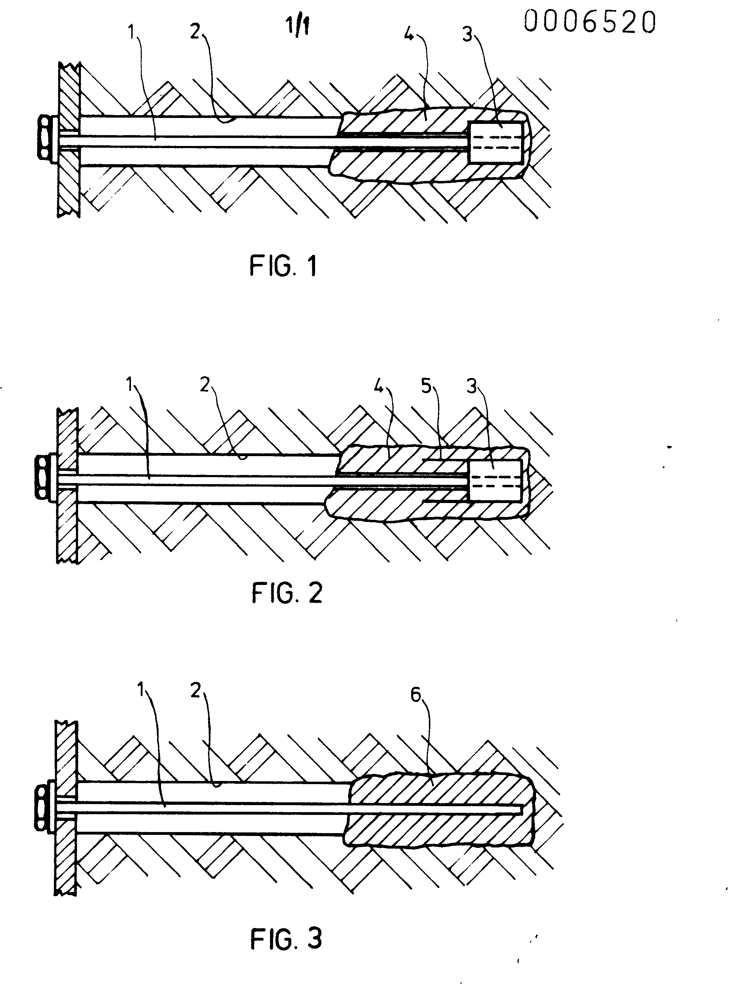

In Figur 1 wird das Zugglied 1 vom Endstück 3 kraftschlüssig umschlossen. Das Endstück muß so lang sein, daß die Ankerkraft in das Endstück übertragen werden kann. Es besteht vorzugsweise aus einem füllstoffhaltigen Reaktionsharz das auch glasfaserverstärkt sein kann; als Reaktionsharz sind besonders ungesättigte Polyester-, Epoxid- oder Polyurethanharze geeignet. Der Querschnitt des Endstücks muß so sein, daß das Endstück mit dem Zugglied im Inneren des Bohr- bzw. Rammrohres bis zum tiefsten Bohrloch vorgeschoben werden kann. Bevorzugte Querschnittsformen für das Endstück ist der Kreis, doch sind auch andere Formen wie Ellipse, Rechteck, Dreieck möglich. Zur Erleichterung des Einschiebens kann das erdseitige Ende kegelförmig zugespitzt sein.

Die über das Zugglied 1 in das Endstück 3 eingeleitete Kraft wird über Druck und/oder Scherkräfte auf den Kunstboden 4 übertragen. der Kunstboden 4 trägt die eingeleitete Last über Druck und Scherwiderstand auf den ihn umgebenden Verankerungsboden - ein Lockergestein oder ein Felsgestein - ab. Der Kunstboden 4 wird unter hohem Druck verdichtet und verdrängt etwas das umgebende Erdreich bzw. füllt in Felsen Klüfte und Spalten aus. Der Kunstboden 4 hat eine rein statistische Aufgabe; als zusätzlicher Korrosionsschutz wie bei den bekannten Verpreßankern aus Stahl hat er nicht zu wirken. Die Bedingung der Wasserundurchlässigkeit - praktisch heißt das, daß er riss- und nahezu porenfrei sein und bleiben muß - muß nicht erfüllt sein. Er braucht nicht aus einem im Boden erhärtenden Material zu bestehen, und er muß auch nicht das Zugglied und das Endstück mit einer Mindeststärke überdecken. Verlangt wird von dem Kunstboden nur, den bestmöglichen Übergang von dem im Vergleich zum Verankerungsboden starren Anker mit konzen-

Le A 18 916

trierter Last auf den nachgiebigeren Verankerungsboden
im ursprünglichen Spannungszustand zu schaffen, wobei
die Zusammensetzung des Kunstbodens abgestimmt sein sollte
auf die bodenmechanischen Eigenschaften des Verankerungsbodens,welcher beispielsweise als bindiges oder nichtbindiges Lockergestein oder als Felsen anstehen kann. Dieser
Übergang vollzieht sich durch die Ausbildung von Stützliniengewölben und Scherverbund, der durch örtliche Überbeanspruchung des Kunstbodenmaterials, wie z.B. Rißbildung,
begünstigt werden kann. Mögliche Materialien für den Kunstboden können Elektrofilterasche oder Hochofenschlacke oder
auch Sand sein, wobei Zusatzmittel in Form von Verpreßhilfen,
Füllern, Bindemitteln, Quellmitteln zugegeben werden können.
Besonders bevorzugt besteht der Kunstboden aus Zementmörtel, wie er auch bei bekannten Verpreßankern verwendet
wird. Auch kunstharzmodifizierte Mörtel haben sich bewährt.

Im Bereich des Kunstbodens 4 soll ein Verbund zwischen
dem Zugglied 1 und dem Kunstboden 4 ausgeschlossen sein.
Vorzugsweise ist daher das Zugglied mit einem Überzug
versehen, der keine korrosionsschützenden Eigenschaften
zu haben braucht. Geeignet ist beispielsweise ein Anstrich
aus Hartwachs oder Bitumen oder ein Überzug aus Kunststoff
oder Metall.

In Fig. 2 ist an dem Enstück 3 ein glasfaserverstärktes
Rohr 5 kraftschlüssig befestigt. Es ragt über das Endstück luftseitig hervor. Es wird dadurch über die stirnseitige Kontaktpressung hinaus Kraft über Scherverbund in
den Kunstboden eingeleitet.

Le A 18 916

- 6 -

In Figur 3 ist ein Anker ohne Endstück in Verbund mit dem
Verpreßkörper 6 dargestellt.

Le A 18 916

Patentansprüche

1. Vor- und nachspannbarer Erd- und Felsanker, dadurch gekennzeichnet, daß das Zugglied (1) aus unidirektional angeordneten Glasfasern besteht, die in Kunststoff eingebettet sind.

2. Vor- und nachspannbarer Erd- und Felsanker nach Anspruch 1, dadurch gekennzeichnet, daß das Zugglied (1) zur Verankerung mit Verbund in einem Verpreßkörper (6) eingebettet ist.

3. Vor- und nachspannbarer Erd- und Felsanker nach Anspruch 1, dadurch gekennzeichnet, daß sich das Zugglied (1) mit einem Endstück (3) gegen einen in sich verspannbaren Kunstboden (4) durch Druck- und/oder Scherkräfte abstützt, der Kunstboden (4) aber mit dem Zugglied (1) sonst nicht verbunden ist.

4. Vor- und nachspannbarer Erd- und Felsanker nach Anspruch 3, dadurch gekennzeichnet, daß das Endstück (3) aus einem füllstoffhaltigen Reaktionsharz besteht.

5. Vor- und nachspannbarer Erd- und Felsanker nach Ansprüchen 3 und 4, dadurch gekennzeichnet, daß das Endstück (3) in luftseitiger Richtung durch ein glasfaserverstärktes Kunststoffrohr (5) verlängert ist.

6. Vor- und nachspannbarer Erd- und Felsanker nach Ansprüchen 2 bis 5, dadurch gekennzeichnet, daß der Kunstboden (4) bzw. der Verpreßkörper (6) ein hydraulischer Mörtel ist.

Le A 18 916

1/1   0006520

FIG. 1

FIG. 2

FIG. 3

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | US - A - 2 921 463 (GOLDFEIN) <br> * Anspruch 1 * <br> -- | 1,2,6 | E 21 D 21/00 <br>              20/02 <br> E 02 D  5/74 |
| X | FR - A - 2 096 653 (CELTITE) <br> * Ansprüche 1-5; Seite 1, Zeilen 1-23 * <br> -- | 1,2 | |
| X | CH - A - 448 859 (AMERICAN CYANAMID) <br> * Spalte 3, Zeilen 54-62; Anspruch 1 * <br> -- | 1 | RECHERCHIERTE SACHGEBIETE (Int. Cl.²) <br><br> E 21 D <br> E 02 D <br> F 16 B |
| X | FR - A - 2 232 673 (COAL INDUSTRY) <br> * Seite 4, Zeilen 6-16; Ansprüche 3,5; Figuren 1,3,4 * <br> -- | 1 | |
| XD | US - A - 4 140 428 (McLAIN) <br> * Spalte 2, Zeilen 11-14; Spalte 3, Zeilen 27-29 * <br> -- | 1 | |
| | FR - A - 2 353 682 (GEBIRGS-SICHERUNG) <br> * Seite 1, Zeilen 33-35; Seite 2, Zeilen 12,13,25-30; Seite 4, Zeilen 27-30; Seite 5, Zeilen 3-6; Figuren 1-4 * <br> -- | 1,2 | KATEGORIE DER GENANNTEN DOKUMENTE <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| | FR - A - 2 360 748 (IMPERIAL CHEMICAL) <br> * Seite 3, Zeile 28 - Seite 4, Zeile 3; Anspruch 10 * <br> -- | 1,6 | |

./.

Der vorliegende Recherchenbericht wurde für alle Patentansprüche erstellt.

&: Mitglied der gleichen Patent-familie, übereinstimmendes Dokument

| Recherchenort | Abschlußdatum der Recherche | Prüfer |
|---|---|---|
| Den Haag | 25-09-1979 | HAKIN |

EPA form 1503.1  06.78

Europäisches
Patentamt

**EUROPÄISCHER RECHERCHENBERICHT**

0006520

Nummer der Anmeldung

EP 79 10 1870
-2-

| Kategorie | EINSCHLÄGIGE DOKUMENTE | | KLASSIFIKATION DER ANMELDUNG (Int.Cl.²) |
|---|---|---|---|
| | Kennzeichnung des Dokuments mit Angabe, soweit erforderlich, der maßgeblichen Teile | betrifft Anspruch | |
| | <u>GB - A - 1 404 825</u> (EXCHEM)<br><br>* Seite 2, Zeilen 73-83; Figuren 1-5 *<br><br>-- | 1-6 | |
| | <u>DE - A - 1 904 371</u> (STUMP BOHR)<br><br>* Seite 3, Zeile 17 - Seite 4, Zeile 10; Figur 1 *<br><br>-- | 2,3,6 | |
| | <u>DE - A - 1 908 951</u> (GRUN)<br><br>* Seite 2, Zeile 26 - Seite 3, Zeile 3; Einzige Figur *<br><br>-- | 2,3,6 | RECHERCHIERTE SACHGEBIETE (Int. Cl.²) |
| | <u>DE - A - 2 627 524</u> (NITTO TEKUNO)<br><br>* Seite 8, Zeilen 25-34; Seite 11, Zeile 17 - Seite 12, Zeile 2; Seite 12, Zeile 26 - Seite 13, Zeile 4; Figuren 1,2,11 *<br><br>----- | 2,6 | |

EPA Form 1503.2  06.78